# EUROPEAN PATENT APPLICATION

(11) **EP 1 864 571 A1**
(43) Date of publication of application: **12.12.2007**
(21) Application number: 06076205.1
(22) Date of filing: 09.06.2006
(51) Int. Cl.: A01K 5/00, B01F 7/24

(54) **Auger and animal fodder mixing and dispensing apparatus including such an auger**

(71) Applicant: Schuitemaker Machines B.V., NL-7461 AG Rijssen (NL)
(72) Inventor: te Boekhorst, Paulus Andreas Johannes, 7434 SJ Lettele (NL)
(74) Representative: van Loon, C.J.J.

(57) **Abstract**

An auger for a fodder mixing and dispensing apparatus for mounting in a container (1) in an orientation having the axis of rotation of the auger projecting upwardly from a bottom of the container (1),. The auger has a mixing blade (5; 105) extending helically in a sense of rotation from a leading edge (7) to an uppermost end (8) of the mixing blade (5; 105). The mixing blade projects radially from an inner side (17) of the mixing blade (5; 105) to an outer edge (18) of the mixing blade (5; 105). A vertically open passage (19; 119) is left along or through the mixing blade (5; 105), between the leading edge (7) and the uppermost end (8) of the mixing blade (5; 105) and inwardly spaced from the outer edge (18) of the mixing blade (5; 105). A fodder mixing and dispensing apparatus including such an auger is also described.

## Description

### FIELD AND BACKGROUND OF THE INVENTION

The present invention relates to an auger for an animal fodder mixing and dispensing apparatus and to an animal fodder mixing and dispensing apparatus including such an auger. Such augers and animal fodder mixing and dispensing apparatus are for example described in DE-A-102 06 270, EP-A-1 082 896, EP-A-1 224 859, EP-A-1 417 999, EP-A-1 634 494, US-A-2003/0223308, US-A-2004/0071045, US-A-5 590 963, US-A-5 590 963 and US-A-5 823 449.

In practice, such animal fodder mixing and dispensing apparatus are used in a wide scale to mix animal fodder ingredients and to dispense the mixed fodder, for instance in a stall. Problems that are often encountered when using such animal fodder mixing and dispensing apparatus are, that the couple required for rotating the auger is sometimes larger than the couple the drive of a tractor coupled to the apparatus can generate, in particular if mixing and/or dispensing is to be restarted after the auger has been temporarily stopped. Another problem of such apparatus is, that substantial amounts of fodder remain on the auger after the container has been emptied to the extent that no fodder is dispensed from the container anymore by normal operation.

### SUMMARY OF THE INVENTION

It is an object of the present invention to provide an auger for a fodder mixing and dispensing apparatus that requires less couple to be driven, in particular when started from standstill and on which less fodder is left when the fodder is dispensed from the container.

According to the invention, this object is achieved by providing an auger according to claim 1. The invention may also be embodied in a fodder mixing and dispensing apparatus according to claim 5, which includes such an auger.

The vertically open passage allows feed to also recirculate through a central area of the auger and reduces the couple required for rotating the auger when the container is filled. Nevertheless, the auger has a sufficiently large diameter and axial size as well as a sufficient number of windings to achieve an effective and evenly distributed mixing effect. Because the mixing blade is open in areas spaced from its outer edge, where centrifugal forces are relatively low during rotation, the mixing blade has an at least reduced surface on which feed stays while the auger is rotated in an otherwise practically emptied container.

Particular elaborations and embodiments of the invention are set forth in the dependent claims.

Further features, effects and details of the invention appear from the detailed description and the drawings.

### BRIEF DESCRIPTION OF THE DRAWINGS

Fig. 1 is a schematic, partially cut-away side view of an example of a fodder mixing and dispensing apparatus according to the invention;
Fig. 2 is a schematic, partially cut-away frontal view of the fodder mixing and dispensing apparatus shown in Fig. 1;
Fig. 3 is a perspective view of the auger of the fodder mixing and dispensing apparatus shown in Figs. 1 and 2;
Fig. 4 is an axial view of the auger shown in Fig. 3;
Fig. 5 is a first side view of the auger shown in Figs. 3 and 4;
Fig. 6 is a second side view of the auger shown in Figs. 3-5;
Fig. 7 is a perspective view of another example of an auger according to the invention; and
Fig. 8 is a perspective view of a third example of an auger according to the invention.

### DETAILED DESCRIPTION

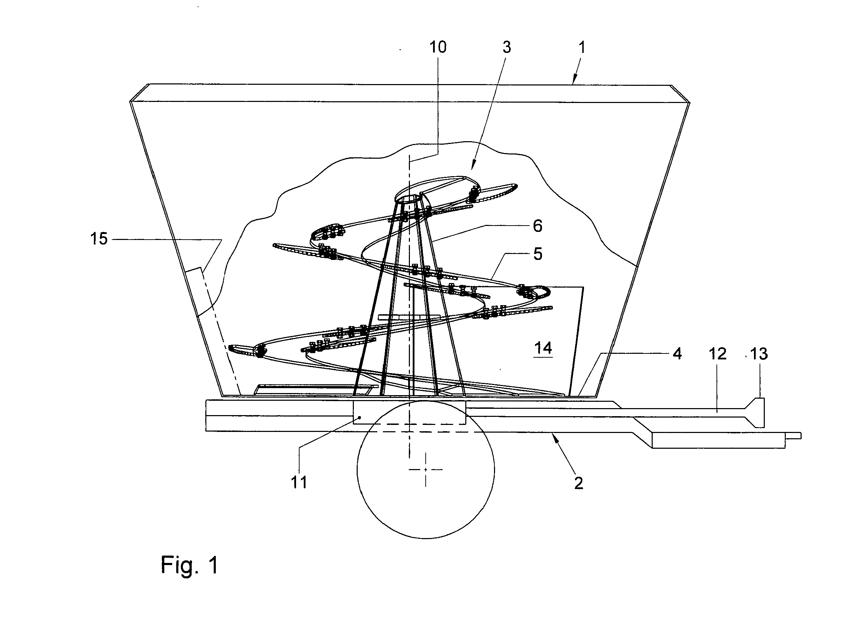

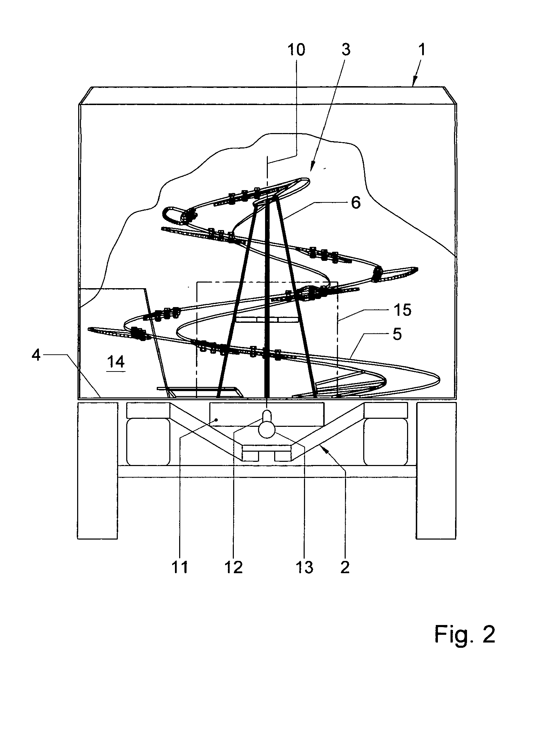

The fodder mixing and dispensing apparatus shown in Figs. 1 and 2 has a mixing container 1, mounted on a trailer chassis 2. An auger 3 is mounted in the container 1, such that its axis of rotation 10 projects upwardly from a bottom 4 of the container 2 and has a flight 5 forming a helical mixing blade carried by a carrier rotor 6.

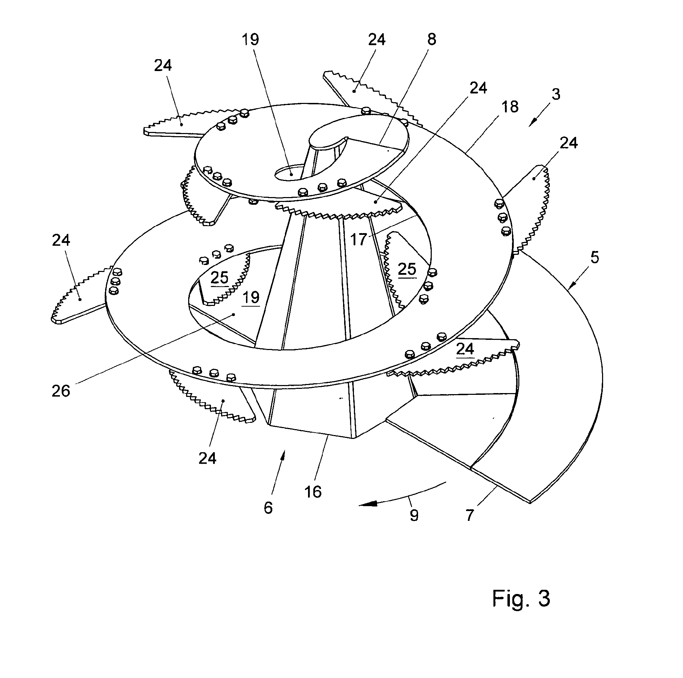

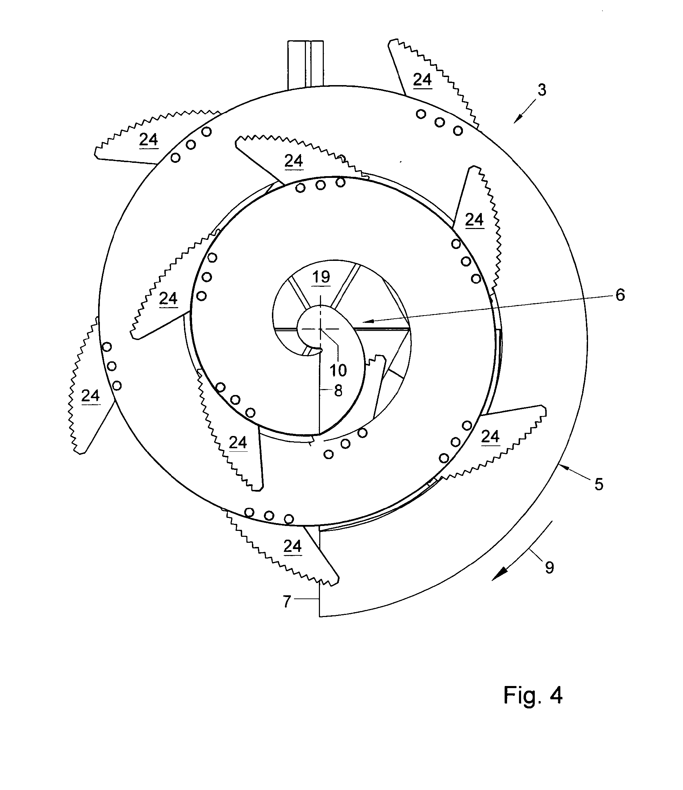

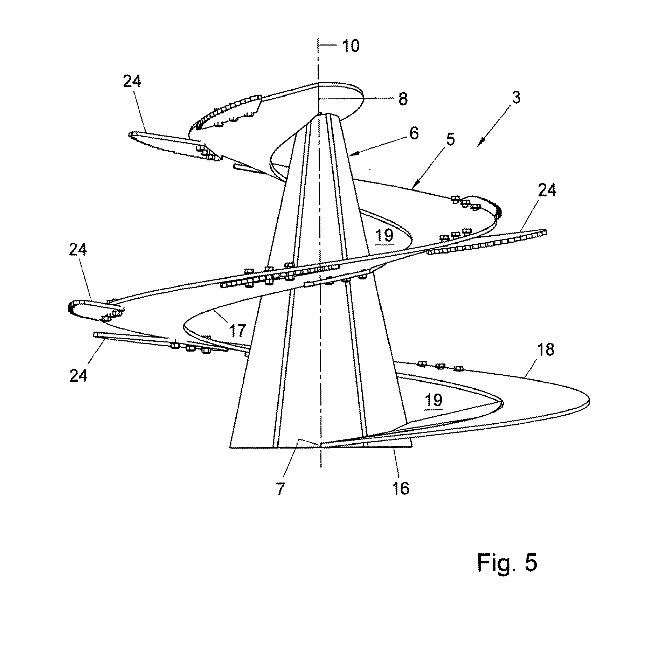

As best seen in Figs. 3-6, the mixing blade extends helically from a leading cutting edge 7 in a sense of rotation to an uppermost end 8 of the helical mixing blade 5. The sense of rotation in which the helix formed by the mixing blade 5 extends from the leading cutting edge 7 is contrary to the sense of rotation 9 in which the auger 3 is rotated when in operation. The rotation of the auger 3 in the sense of rotation 9 causes the helical mixing blade 5 to drive fodder upwardly in the area of the auger 3. This movement is compensated by downward displacement of fodder in more peripheral areas in the container 1 and causes a mixing effect.

To drive the rotation of the auger 3 about its axis of rotation 10, the auger 3 is coupled to a transmission box 11, which in turn is coupled to a drive shaft 12 with a coupling 13 for coupling to a drive of a tractor.

After the feed in the container 1 has been mixed, the feed can be discharged from the container 1 opening a container door 14 allowing the material to spill out of the container 1. According to the present example, the door 14 is positioned mainly to the side of the container 1. However, also other positions, such in a side wall at the front or at the rear (as illustrated by dash and dot lines 15) or in the bottom wall are possible.

The auger 3 has a first end 16 mountable in the container 1 of the apparatus. The mixing blade 5 projects radially from an inner side 17 of the mixing blade 5 to an outer edge 18 of the mixing blade 5. A vertically open passage 19 is left along the mixing blade 5, between the leading cutting edge 17 and the uppermost end 18 of the mixing blade 5 and is located inwardly spaced from the outer edge 18 of the mixing blade 5.

The vertically open passage 19 allows feed to also recirculate through a central area of the auger 3 and reduces the couple required for rotating the auger 3 when the container 1 is filled. Nevertheless, the auger 3 has a sufficiently large diameter and axial size as well as a sufficient number of windings to achieve an effective and evenly distributed mixing effect. Because the mixing blade 5 is open in areas spaced from its outer edge 18, where centrifugal forces are relatively low during rotation, the mixing blade 5 has an at least reduced surface area on which feed stays while the auger 3 is rotated in an otherwise practically emptied container 1.

In the auger 3 according to the present example, the passage 19 is particularly effective, because it extends helically along most of the inner edge 17 of the mixing blade 5.

Because, furthermore, seen in axial view, the mixing blade 5 forms a spiral, it can be manufactured relatively easily by cutting a spiral blank out of a plate and axially displacing the center from the spiral away from the outermost winding.

For minimizing the amounts of feed that stay on a rotating auger 3, it is advantageous, that the passage 19 extends along the central carrier rotor 6 that extends co-axially with the axis of rotation 10, since it is directly adjacent to that carrier rotor 6 that the centrifugal forces during rotation are the smallest so that feed would tend to stay on the mixing blade 5 in particular in zones closely along the rotor 6. It is also conceivable to provide an auger without a central rotor, but then measures are necessary to provide sufficient support for and/or rigidity in the mixing blade.

Carrier arms (not shown) extending from the central carrier rotor 6 to the mixing blade 5 may be provided to support the mixing blade 5 in addition to its connection to the top of the rotor 6. If provided, such carrier arms preferably have flat cross sections, which minimizes the tendency to entrain feed in rotation with the auger 3 and are preferably tilted such that a leading side is in a higher position than the trailing side when the auger 3 is in operating position and rotated in the sense of rotation 9. Such a tilted position of the carrier arms causes a further local upward displacement of feed, which contributes to the mixing of the feed. Furthermore, the carrier arms preferably project from the carrier rotor 6 in a downwardly inclined direction when the auger 3 is in operating position, so that feed easily slides off the arms when the auger 3 is rotating and the arms rotate in an empty space. Thus, it is counteracted that feed is left on the arms when the container 1 becomes empty.

In the present example, knife blades 24, 25 are mounted to the mixing blade 8 and project radially from inner and outer edges 17, 18 of the mixing blade 5. The knife blades projecting from the inner edges provide an additional cutting effect and counteract that the passage 19 becomes blocked by large pieces of feed, such as hay bale parts.

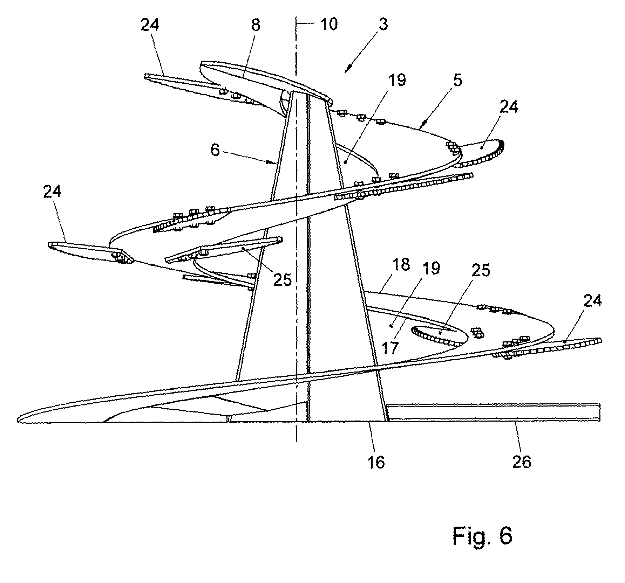

Under the mixing blades 5, an additional mixing blade 26 is mounted. This is best seen in Fig. 6.

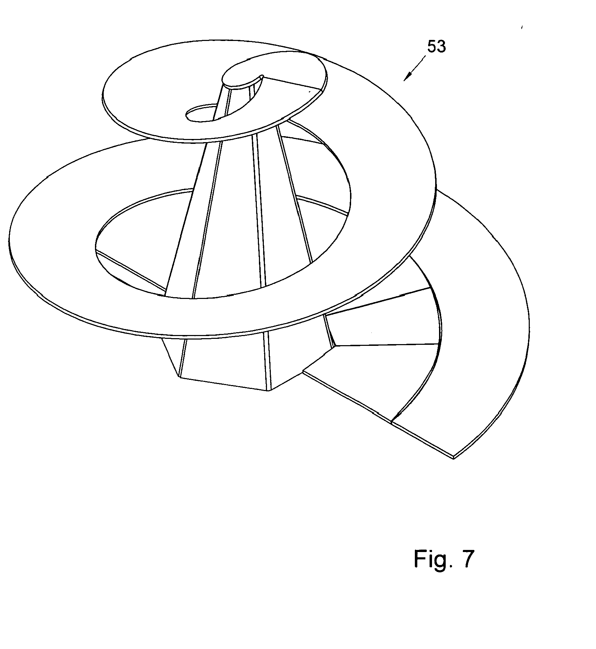

In Fig. 7, an alternative example 53 of an auger according to the invention is shown, which is not equipped with cutting knifes.

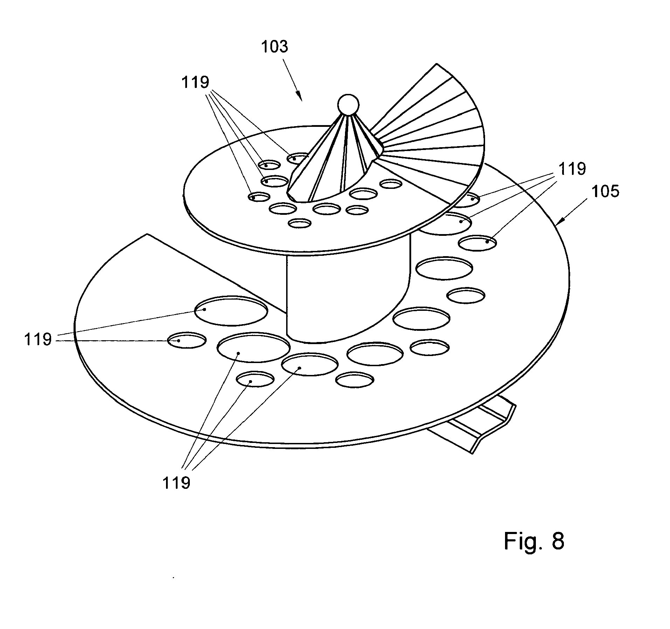

In Fig. 8, yet another example 103 of an auger according to the invention is shown. In this auger 103, the vertically open passages 119 do not extend along, but through the mixing blade 105 and are provided in the form of holes in the mixing blade 105.

It will be appreciated that the invention is not limited to the specific examples described herein and that various modifications and alterations are possible without departing from the invention.

## Claims

1. An auger for a fodder mixing and dispensing apparatus, the auger (3; 53; 103) having a mountable end for mounting the auger (3; 53; 103) in a container (1) of the apparatus such that an axis of rotation (10) of the auger (3; 53; 103) projects upwardly from a bottom of the container (1) and a mixing blade (5; 105) extending helically in a sense of rotation from a leading edge (7) to an uppermost end (8) of the mixing blade (5; 105) and projecting radially from an inner side (17) of the mixing blade (5; 105) to an outer edge (18) of the mixing blade (5; 105), wherein a vertically open passage (19; 119) is left along or through the mixing blade (5; 105), between the leading edge (7) and the uppermost end (8) of the mixing blade (5; 105) and inwardly spaced from the outer edge (18) of the mixing blade (5; 105).

2. An auger according to claim 1, wherein the passage (19) extends helically along at least a portion of the inner edge (17) of the mixing blade (5).

3. An auger according to claim 2, wherein, in axial view, the mixing blade (5) forms a spiral.

4. An auger according to claim 2 or 3, wherein the passage (19) extends along a central carrier rotor (6) extending co-axially with the axis of rotation (10).

5. A fodder mixing and dispensing apparatus comprising:
a container (1) having a discharge passage (14, 15) through a wall of the container (1);
an auger (3; 53; 103) according to any one of the preceding claims; and
a drive (11) coupled to the auger (3; 53; 103) for driving the auger (3; 53; 103) contrary to said sense of rotation for driving material being mixed in an upward direction.
